# EUROPÄISCHE PATENTSCHRIFT

(11) **EP 0 618 105 B1**
(45) Veröffentlichungstag und Bekanntmachung des Hinweises auf die Patenterteilung: **07.01.1999**
(21) Anmeldenummer: 93105507.3
(22) Anmeldetag: 02.04.1993
(51) Int. Cl.: B60P 1/64

(54) **Transportfahrzeug**
Transport vehicle
Véhicule de transport

(43) Veröffentlichungstag der Anmeldung: 05.10.1994
(73) Patentinhaber: F + E Gesellschaft für Vermittlung und Entwicklung von Forschungsleistungen mbH, 10625 Berlin (DE)
(72) Erfinder: Kasischke, Michael, D-10707 Berlin (DE)
(74) Vertreter: Hoffmann, Klaus-Dieter, Dipl.-Ing.

(56) Entgegenhaltungen:
- EP-A- 0 286 576
- WO-A-86/04307
- FR-A- 2 460 802
- GB-A- 2 146 974

## Beschreibung

Die Erfindung betrifft ein Transportfahrzeug nach dem Oberbegriff des Patentanspruchs 1.

Transportfahrzeuge dienen zum Transport gefüllter Silos zu Baustellen, zum Abtransport geleerter Silos von Baustellen und zum Auf- und Absetzen insbesondere von Entsorgungscontainern, wie beispielsweise Schutt- oder Abfallcontainern, Aktenvernichtungscontainern und dergleichen. Aus der EP-A-286 576 geht ein gattungsgemäßes Transportfahrzeug hervor, bei dem auf den Längsträgern des Kipprahmens jeweils eine Container - Silo - Aufnahmeschiene verfahrbar ist, zwischen denen mindestens zwei Längsführungen im Abstand voneinander angeordnet sind, an denen der Hakenschlitten und ein Silo-Aufnahmeschlitten verfahrbar geführt ist. Der Hakenschlitten weist eine an den Längsführungen geführte Gleitplatte auf, an deren heckseitiger Querkante eine hydraulisch verschwenkbare Kipplatte angelenkt ist, auf der als Hakenaufnehmer zwei hydraulisch verschwenkbare, gewölbte Hakenschalen an zwei Schwenklagern montiert sind, an denen jeweils ein Hakensegment angelenkt ist.

Der durchgehende Kipprahmen eines derartigen Transportfahrzeuges, das Abrollcontainer nach DIN 30 722 bewegen kann, ist über 90^{o} kippbar. Ein solches Transportfahrzeug kann auch aufrecht stehende Behälter aufnehmen. Der Behälter darf jedoch nur so hoch sein, daß der Haken zur Aufname der Behälter-, Container-/Siloöse in seiner höchsten Position noch über den aufrecht stehenden Behälter verschwenkt werden kann.

Die hydraulisch verschwenkbaren, gewölbten Hakenschalen mit dem jeweils angelenkten Hakensegmenten, die zu einem Haken zusammengeklappt werden können, eignen sich zum Transport runder Container oder Silos auf dem Transportfahrzeug, da die beiden aufgeklappten Hakenschalen als sichere Auflageschale für den Silo dienen und der Haken dem Silo nicht mehr im Wege ist. Es können somit erheblich höhere aufrecht stehende Behälter mit dem Transportfahrzeug befördert sowie ab- und aufgesetzt werden.

Als Nachteil erweist sich jedoch bei diesem bekannten Transportfahrzeug zum einen, daß der vom Hakenschlitten beim Transport der Abrollcontainer im Kipprahmen beanspruchte Raum verhältnismäßig groß ist, und daß zum anderen kubische, aufrecht stehende Behälter, die höher als die aufgeklappten Hakenschalen mit den jeweils angelenkten Hakensegmenten sind, mit dieser aufgeklappten Hakenkonstruktion sich nicht bewegen lassen.

Der Erfindung liegt daher die Aufgabe zugrunde, ein gattungsgemäßes Transportfahrzeug zur Verfügung zu stellen, bei dem die Gestaltung des Hakenaufnehmers einen möglichst kurz gehaltenen Kipprahmen und ein Aufsetzen des Containers oder Silos annähernd über den gesamten Kipprahmen hin gewährleistet sowie den Transport senkrecht aufgestellter Container oder Silos ermöglicht, die höher als der Hakenaufnehmer mit dem daran vorgesehenen Haken in Betriebsstellung des Hakenaufnehmers sind.

Diese Aufgabe wird durch die Merkmale des kennzeichnenden Teils des Patentanspruchs 1 gelöst.

Vorteilhafte Weiterbildungen des erfindungsgemäßen Transportfahrzeuges ergeben dich aus den Patentansprüchen 2 bis 5.

Vorzugsweise ist der Hakenaufnehmer in seiner unversenkten Position - gesehem in der Seitenansicht - im wesentlichen L-förmig ausgebildet, wobei der kürzere Schenkel der L-Form am vom längeren Schenkel entfernten Ende die am Kipprahmen vorgesehene Schwenklagerung des Hakenschlittens aufweist. Der kürzere und der längere Schenkel der L-Form des Hakenaufnehmers sind an ihren benachbarten Enden derart miteinander verbunden, daß der längere Schenkel mittels eines Schwenkzylinders vom am Hakenschlitten gelagerten Ende des kürzeren Schenkels weg in Ausrichtung mit diesem und zurück verschwenkbar und zusammen mit dem mit ihm in Ausrichtung befindlichen kürzeren Schenkel in dem Kipprahmen versenkbar ist. Die beiden aneinander liegenden Flächen des kürzeren und des in Bezug auf diesen verschwenkbaren längeren Schenkels der L-Form des Hakenaufnehmers verlaufen unter einem Winkel von 45^{o} zur unteren Kante des kürzeren Schenkels.

Vorteilhafterweise ist der versenkbare Hakenaufnehmer an einem Schiebearm eines Hakenlifts befestigt. Die Container- Siloaufnahmeelemente können von einem Paar Aufnahmesegmenten gebildet sein, die an beliebiger Stelle in die am Kipprahmen montierten Ketten- oder Seilzüge steckbar sind. Für den Transport runder Container werden in die Antriebsketten des Hakenschlittens jeweils an beliebigen Stellen Paare der Aufnahmesegmente gesteckt.

Erfindungsgemäß erfolgt die Aufnahme eines senkrecht stehenden, kubischen Containers oder Silos auf das Transportfahrzeug in folgenden Arbeitsschritten:
a) der größere Schenkel des Hakenaufnehmers wird zum Fahrzeugführerhaus hin in Ausrichtung mit dem kürzeren Schenkel verschwenkt und der gesamte Hakenaufnehmer dabei zusammen mit dem Haken in dem Kipprahmen versenkt,
b) gegebenfalls werden die paarweisen Aufnahmesegmente in die Antriebsketten des Hakenschlittens gesteckt,
c) der Kipprahmen wird dann in die senkrechte Position gebracht,
d) der Hakenschlitten wird darauf mittels des am Hakenlift befestigten Schiebearms hydraulisch im Kipprahmen in die Nähe der höchstmöglichen Position verschoben,
e) durch Anschlagmittel (z.B. Seile, Ketten und/oder Haken je nach Behältertyp) wird eine Aufnahmeverbindung zwischen dem Kipprahmen und dem Behälter hergestellt,
f) anschließend wird der Hakenschlitten in die höchstmögliche Position hochgefahren, wobei die Verbindung zwischen dem Kipprahmen und dem Behälter zunächst gestrafft und der Behälter dann gerinfügig angehoben wird,
g) der Kipprahmen wird danach in die waagerechte Position gebracht, wobei zugleich die Aufnahmesegmente zum Heck des Transportfahrzeuges hin verfahren werden und der Kipprahmen dicht hinter dem Fahrzeugführerhaus abgesenkt wird,
h) der Behälter wird dann auf dem Transportfahrzeug gesichert.

Um den Container oder Silo nach durchgeführtem Transport mit dem Transportfahrzeug an einem gewünschten Ort aufzustellen, werden die oben beschriebenen Arbeitsschritte in der umgekehrten Reihenfolge ausgeführt.

Die Erfindung ermöglicht es, den Kipprahmen des Transportfahrzeuges verhältnismäßig kurz zu halten, wobei ein Aufsetzen des Containers oder Silos annähernd über den gesamten Kipprahmen möglich ist. Die spezielle Gestaltung des Hakenaufnehmers des erfindungsgemäßen Transportfahrzeugs sorgt für eine sichere Aufnahme und einen gesicherten Transport kubischer, hochkant stehender Behälter, die höher als der Hakenaufnehmer mit dem daran befindlichen Haken in Betriebsstellung des Hakenaufnehmers sind.

Die Erfindung wird nun anhand der Zeichnungen erläutert. In diesen sind:
- Fig. 1: eine schematische Seitenansicht des Transportfahrzeuges, wobei der Kipprahmen des letzteren in drei Stellungen gezeigt ist, und
- Fig. 2: eine weitere schematische Seitenansicht eines Teils des Transportfahrzeuges, der teilweise aufgebrochen dargestellt ist.

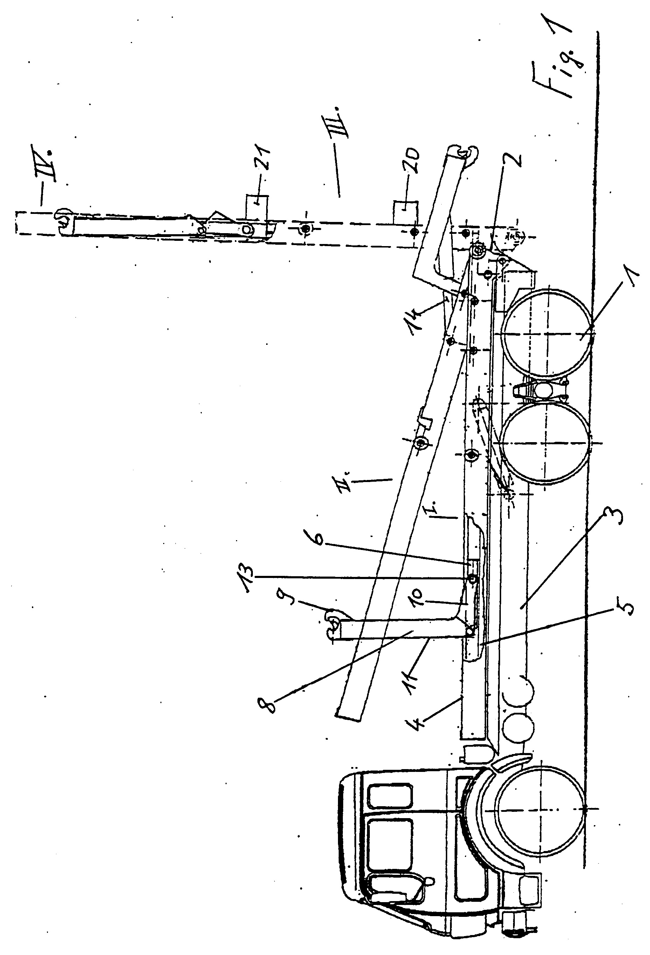

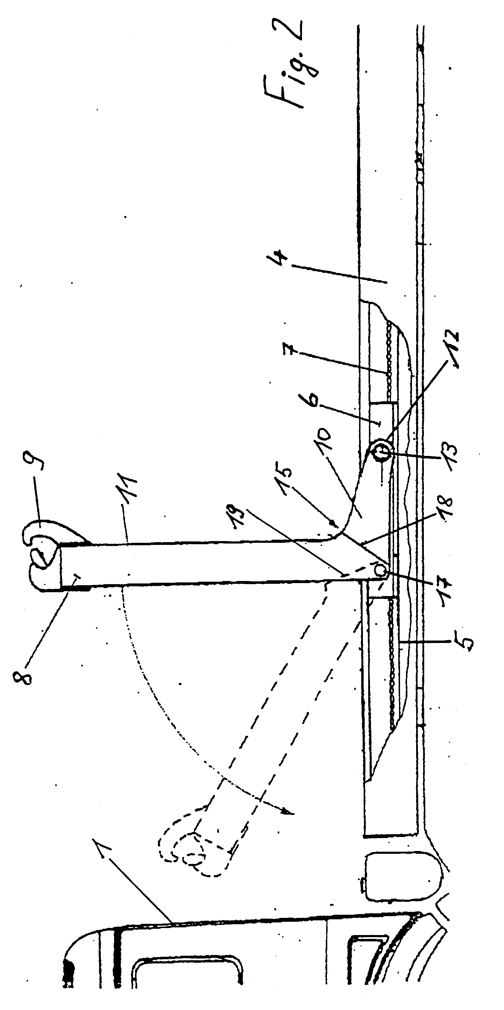

Wie in Fig. 1 schematisch dargestellt ist, weist das Transportfahrzeug 1 einen am Heck 2 des Fahrzeugbaurahmens 3 schwenkbar gelagerten, hydraulisch heb- und senkbaren Kipprahmen 4 auf, der durchgehend ist und über einen Winkel von mehr als 90^{o} aus der wagerechten Position in die senkrechte Position und zurück verschwenkt werden kann. Der Kipprahmen 4 weist zwei Längsträger 5 auf, in denen ein Hakenschlitten 6, der in Antriebsverbindung mit am Kipprahmen 4 montierten Kettenzügen 7 steht, verfahrbar geführt ist, wie am bestens aus Fig. 2 hervorgeht. Ein Hakenaufnehmer 8, an dem ein Haken 9 angebracht ist, weist in der in den Fig. 1 und 2 dargestellten Ausführungsform eine L-Form auf, wobei der kürzere Schenkel 10 des L-förmigen Hakenaufnehmers 8 mit seinem vom längeren Schenkel 11 der L-Form entfernten Ende 12 über ein Schwenklager 13 am Kipprahmen 4 derart schwenkbar gelagert ist, daß der L-förmige Hakenaufnehmer 4 insgesamt zum Heck 2 des Fahrzeugrahmens 3 hin z.B. aus einer Stellung I in Fig. 1, in der der kürzere Schenkel der L-Form des Hakenaufnehmers 8 im wesentlichen im Kipprahmen 4 gelegen und der längere Schenkel 11 des L-förmigen Hakenaufnehmers 8 senkrecht zum Kipprahmen gerichtet ist, in eine Stellung II in Fig. 1 mittels eines Schwenkzylinders 14 bewegbar ist, in der der kürzere und der längere Schenkel 10 bzw. 11 des L-förmigen Hakenaufnehmers 8 senkrecht bzw. parallel zu dem seinerseits aus der waagerechten Stellung in die in Fig. 1 gezeigte Schräglage verschwenkten Kipprahmen 4 gelegen sind. Der L-förmigen Hakenaufnehmer 8 ist in seinem rechten Winkel 15 diagonal unter 45^{o} geteilt, wobei die beiden aneinander liegenden Flächen des kürzeren und des längeren Schenkels 10 bzw. 11 des L-förmigen Hakenaufnehmers an der vorderen unteren Kante 16 durch ein Schwenklager 17 derart miteinander verbunden sind, daß der längere Schenkel mittels des Schwenkzylinders 14 um 90^{o} vom am Hakenschlitten 6 gelagerten Ende 12 des kürzeren Schenkels 10 weg in Ausrichtung mit diesem verschwenkbar und zusammen mit dem kürzeren Schenkel 10 in dem Kipprahmen 4 versenkbar ist, wie besonders aus Fig. 2, aber auch aus der in Fig. 1 gezeigten senkrechten Stellung des Kipprahmens 4 hervorgeht. Die unter 45^{o} verlaufende Fläche 18 des kürzeren Schenkel 10 dient als Widerlager zu der komplementären Fläche 19 am längeren Schenkel 11 des L-förmigen Hakenaufnehmers 8, so daß der längere Schenkel 11 aus seiner im Kipprahmen 4 versenkten Stellung nur um 90^{o} im Uhrzeigersinn gegen den kürzeren Schenkel 10 verschwenkt werden kann.

Der versenkbare Hakenaufnehmer 8 ist an einem Schiebearm eines Hakenaufnehmerliftes befestigt, so daß der versenkte Hakenaufnehmer 8 geeignet aus der in Fig. 1 gezeigten Lage in der Nähe der höchstmöglichen Stellung in dem senkrecht stehenden Kipprahmen 4 in die höchstmögliche Stellung IV in dem senkrecht stehenden Kipprahmen 4 verschiebbar ist, in der eine von einem Anschlagmittel zwischen dem Kipprahmen 4 und dem aufrecht stehenden Behälter hergestellte Aufnahmeverbindung gestrafft und der Behälter geringfügig angehoben sind (hier nicht dargestellt). In dieser Position des versenkten Hakenaufnehmers 8 lassen sich kubische Behälter transportieren, die über den versenkten Hakenaufnehmer 8 hinausragen. Wie aus Fig. 1 weiterhin ersichtlich ist, sind in die Antriebskettenzüge 7 am Kipprahmen 4 schalenförmige Auflagensegmente 20, 21 gesteckt, von denen der Behälter geeignet aufnehmbar ist.

## Patentansprüche

1. Transportfahrzeug (1) mit mindestens einem Hebezeug zum Auf- und Absetzen von Silos und/oder Containern und einem geländegängigen ein- oder mehrachsigen Fahrgestell, mit einem am Heck (2) des Fahrzeugbaurahmens (3) schwenkbar gelagerten, hydraulisch heb- und senkbaren Kipprahmen (4), der zwei Längsträger (5) aufweist, längs der jeweils Container - Siloaufnahmeelemente (20,21) und ein Hakenschlitten (6), die in Antriebsverbindung mit am Kipprahmen (4) montierten antreibbaren Ketten- oder Seilzügen (7) stehen, verfahrbar geführt sind, und mit mindestens einem hydraulisch verschwenkbar gelagerten, mit dem Hakenschlitten (6) mechanisch verbundenen, einen Haken (9) aufweisenden Hakenaufnehmer (8), der in Stellung zur Verbindung des Hakens (9) mit einer Container-/Siloöse oder in andere Arbeitsstellungen bewegbar ist, dadurch gekennzeichnet, daß der Hakenaufnehmer (8) unmittelbar an dem Hakenschlitten (6), der in dem Kipprahmen (4) verschiebbar geführt ist, um eine zu den Längsträgern (5) des Kipprahmens (4) senkrechte Schwenkachse (13) in Längsrichtung des Kipprahmens (4) schwenkbar gelagert und in letzteren versenkbar ist.

2. Transportfahrzeug nach Anspruch 1, dadurch gekennzeichnet, daß der Hakenaufnehmer (8) in seiner unversenkten Stellung - gesehen in der Seitenansicht - im wesentlichen eine L-Form aufweist, deren kürzerer Schenkel (10) am vom längeren Schenkel (11) entfernten Ende (12) die am Kipprahmen (4) vorgesehene Schwenklagerung (13) des Hakenschlittens (6) aufweist, und daß der kürzere und der längere Schenkel (10 bzw. 11) der L-Form des Hakenaufnehmers (8) an ihren benachbarten Endflächen (18 und 19) durch ein Schwenklager (17) derart miteinander verbunden sind, daß der längere Schenkel (11) mittels eines Schwenkzylinders (14) um 90° vom am Hakenschlitten (6) gelagerten Ende (12) des kürzeren Schenkels (10) in Ausrichtung mit diesen und zurück verschwenkbar und zusammen mit dem kürzeren Schenkel (109 in dem Kipprahmen (4) versenkbar ist.

3. Transportfahrzeug nach Anspruch 2, dadurch gekennzeichnet, daß die beiden aneinander liegenden Flächen (18, 19) des kürzeren und des in Bezug auf diesen verschwenkbaren längeren Schenkels (10 bzw. 11) der L-Form des Hakenaufnehmers (8) unter einem Winkel (15) von 45° zur unteren Kante (16) des kürzeren Schenkels (1) verlaufen, und daß die Fläche (18) ein Widerlager für die Fläche (19) zur Begrenzung einer Schwenkung des letzteren unter einen Winkel von 90° in Bezug auf den kürzeren Schenkel (10) bildet.

4. Transportfahrzeug nach Anspruch 1 bis 3, dadurch gekennzeichnet, daß der versenkbare Hakenaufnehmer (8) an einnem Schiebearm eines Hakenaufnehmerliftes befestigt ist.

5. Transportfahrzeug nach einem der vorhergehenden Ansprüche, dadurch gekennzeichnet, daß die Container - Siloaufnahmeelemente von an beliebigen Stellen in die am Kipprahmen (4) montierten Ketten - oder Seilzüge (7) steckbaren Aufnahmesegmentpaaren (20,21) gebildet sind.

## Claims

1. Transport vehicle (1) with at least one lifting apparatus for the raising and placing of silos and/or containers and a crossroad chassis with one or several axes, with one at the rear (2) of the vehicle construction frame (3) pivotably arranged and hydraulically raisable and lowerable tipping frame (4), which is equipped with two longitudinal beams (5), along each of which container silo pick-up elements (20, 21) and a hook-slide (6) - which are in drive-connection with chain-driven hoists or cable winches (7) which are mounted at the tipping frame (4) - are arranged in a traveling mode and with at least one hydraulically pivotable, with the hook-slide (6) mechanically connected, with a hook equipped (9) hook-lifter (8), which in the position to the connection of the hook (9) or in other work-positions is movable with a container-/silo-eyelet, characterized thereby, that the hook-lifter (8) directly at the hook-slide (6), which is movably arranged in the tipping frame (4), is pivotable in the longitudinal direction of the tipping frame (4) around one pivoting axle (13) which is vertical to the longitudinal beams (5) of the tipping frame (4) and embeddable into the latter.

2. Transport vehicle in accordance with claim 1, characterized thereby, that the hook-lifter (8) in its non-embedded position - seen in the side view - has essentially an L-shape, of which the shorter leg (10) has at the end (12) away from the longer leg (11) the pivoting bearing (13) of the hook - slide (6) arranged at the tipping frame (4), and that the shorter and the longer leg (10 and/or 11) of the L-shaped hook-lifter (8) are at their adjacent end-areas (18 and 19) connected by means of a pivoting bearing (17) in such a manner, that the longer leg (11) is, by means of a pivoting cylinder (14), by 90° from the end (12) located at the hook-slide (6) of the shorter leg (10) in alignment with these and backwards pivotable and embeddable together with the lower leg (10) into the tipping frame (4).

3. Transport vehicle in accordance with claim 2, chacterized thereby, that the two surfaces adjacent to each other (18, 19) of the shorter and with reference thereto pivotable longer leg (10 and/or 11) of the L-shaped hook-lifter (8) run below an angle (15) of 45° to the lower edge (16) of the shorter leg (1) and that the area (18) forms an abutment-block for the surface (19) for the limitation of a pivoting movement of the latter below an angle of 90° with reference to the shorter leg (10).

4. Transport vehicle in accordance with claims 1 to 3, characterized thereby, that the embeddable hook-slide (8) is fastened at a sliding arm of a hook-lifter.

5. Transport vehicle in accordance with one of the previous claims, characterized thereby, that the container-silo-lifting elements are formed by lifting-segment pairs (20, 21) which can be inserted at any place into the chain hoists or cable winches (7) mounted at the tipping frame (4).

## Revendications

1. Véhicule de transport (1) avec au moins un appareil de levage pour le levage et la descente de silos et/ou de conteneurs et un châssis tout terrian à un ou plusieurs axes, avec un cadre basculant (4) pivotant à l'arrière-train (2) du cadre constructif de véhicule (3), levable et abaissable hydrauliquement, présentant deux longerons (5), le long des éléments de levage respectifs (20, 21) de conteneurs - silos et un chariot à crochet (6) se trouvant en connexion d'entraînement avec des palans à chaîne ou à câble (7) entraînenables montés au cadre basculant (4), guides de mainière mobile et avec au moins un leveur à crochet (8) ayant un crochet (9) hydrauliquement pivotable relié mécaniquement avec le chariot à crochet (6), le leveur étant mobile dans la position pour relier le crochet (9) avec un oeillet de conteneur/silo ou dans d'autres positions de travail, caractérisé par le fait que le leveur à crochet (8) est pivotable directement au chariot à crochet (6), étant guidé de mainière directement mobile dans le cadre basculant (4), autour d'un axe de pivotement (13) vertical par rapport aux longerons (5) du cadre basculant (4) en direction longitudinale du cadre basculant (4) et peut être plongé dans ce dernier.

2. Véhicule de transport suivant revendiction 1, caractérisé par le fait que le leveur à crochet (8) en sa position non plongée -. vue latérale - présente essentiellement une forme en L dont le côte plus court (10) présent à l'extrémité (12) distante du côte plus long (11) le logement pivotant (13) prévu au cadre basculant (4) du chariot à crochet (6) et que le côté plus court et le côté plus long (10 resp. 11) de la forme en L du leveur à crochet (8) sont reliés à leurs surfaces terminales voisines (18 et 19) par un palier pivotant (17) de sorte que moyennant un cylindre pivotant (14) le côté plus long (11) est pivotable de 90° de l'extrémité (12) du côté plus court (10) logée au chariot à crochet (6) en alignement avec ceux-ci et retour et est avec le côté plus court (10) enfonçable dans le cadre basculant (4).

3. Véhicule de transport suivant revendication 2, caractérisé par le fait que les deux faces adjacentes (18, 19) du côté plus court et du côté plus long (10 resp. 11) pivotable par rapport à celui-ci de la forme en L du leveur à crochet (8) sont situées sous un angle (15) de 45° par rapport à l'arête inférieure (16) du côté plus court (10) et que la face (18) constitue une culée pour la face (19) afin de limiter un pivotement du dernier sous un angle de 90° par rapport au côté plus court (10).

4. Véhicule de transport suivant revendication 1 à 3, caractérisé par le fait que le leveur à crochet (8) est fixé sur un bras coulissant d'un lift de leveur à crochet.

5. Véhicule de transport suivant une des revendication ci-dessus, caractérisé par le fait que les éléments de levage de conteneurs - silos sont constitués par des paires de segment de levage (20, 21) encartables à des points quelconques dans les palans à chaîne ou à câble (7) montés sur la cadre basculant (4).
